# FASCICULE DE BREVET EUROPEEN

(11) **EP 3 499 366 B1**
(45) Date de publication et mention de la délivrance du brevet: **17.06.2020**
(21) Numéro de dépôt: 18209739.4
(22) Date de dépôt: 03.12.2018
(51) Int. Cl.: G06F 9/46

(54) **DISPOSITIF, CHAÎNE DE TRAITEMENT DE DONNÉES ET PROCÉDÉ DE COMMUTATION DE CONTEXTE**
VORRICHTUNG, DATENVERARBEITUNGSKETTE UND KONTEXT-UMSCHALTVERFAHREN
DEVICE, DATA PROCESSING CHAIN AND METHOD FOR CONTEXT SWITCHING

(30) Priorité: 14.12.2017 FR 1762134
(43) Date de publication de la demande: 19.06.2019
(73) Titulaire: BULL SAS, 78340 Les Clayes Sous Bois (FR)
(72) Inventeur: MENYHART, Zoltan, 38100 Grenoble (FR)
(74) Mandataire: Bonnet, Michel

(56) Documents cités:
- WO-A2-2004/015568
- FR-A1- 2 248 555
- US-A1- 2004 064 589
- US-A1- 2011 185 127
- HAUSER J R ET AL: "Garp: a MIPS processor with a reconfigurable coprocessor", FIELD-PROGRAMMABLE CUSTOM COMPUTING MACHINES, 1997. PROCEEDINGS., THE 5TH ANNUAL IEEE SYMPOSIUM ON NAPA VALLEY, CA, USA 16-18 APRIL 1997, LOS ALAMITOS, CA, USA,IEEE COMPUT. SOC, US, 16 avril 1997 (1997-04-16), pages 12-21, XP010247463, DOI: 10.1109/FPGA.1997.624600 ISBN: 978-0-8186-8159-2
- CALLAHAN T J ET AL: "THE GARP ARCHITECTURE AND C COMPILER", COMPUTER, IEEE COMPUTER SOCIETY, USA, vol. 33, no. 4, 1 avril 2000 (2000-04-01), pages 62-69, XP000948675, ISSN: 0018-9162, DOI: 10.1109/2.839323
- MINGXING TAN ET AL: "Multithreaded pipeline synthesis for data-parallel kernels", COMPUTER-AIDED DESIGN, IEEE PRESS, 445 HOES LANE, PO BOX 1331, PISCATAWAY, NJ 08855-1331 USA, 3 novembre 2014 (2014-11-03), pages 718-725, XP058062337, DOI: 10.1109/ICCAD.2014.7001431 ISBN: 978-1-4799-6277-8

## Description

La présente invention concerne un dispositif de traitement de données, une chaîne de traitement de données et un procédé de commutation de contexte.

L'invention s'applique plus particulièrement à un dispositif de traitement de données du type comportant :
- une unité de traitement de données,
- une mémoire de stockage dans laquelle sont enregistrés des groupes de données relatifs à des contextes respectifs,
- un dispositif de mémoire tampon connecté à une entrée ou bien à une sortie de l'unité de traitement pour échanger des données avec elle, le dispositif de mémoire tampon étant conçu pour :
   - contenir un premier groupe de données relatif à un premier contexte,
   - échanger des données entre l'unité de traitement et le premier groupe de données.

Par exemple, dans le brevet américain publié sous le numéro US 7,512,773 B1, le dispositif de mémoire tampon comporte une unique mémoire tampon locale. Ainsi, pour réaliser une commutation de contexte vers un deuxième groupe de données, il est nécessaire de copier le premier groupe de données depuis la mémoire tampon locale vers la mémoire de stockage, puis de copier le deuxième groupe de données depuis la mémoire de stockage vers la mémoire tampon locale. Ce n'est qu'après ces deux opérations que la commutation de contexte est effective.

Dans un autre exemple, le document "Garp: a MIPS processor with a reconfigurable coprocessor", publié par l'IEEE décrit un système pour la gestion de matériel informatique reconfigurable à plusieurs niveaux, y comprise la commutation de contexte. Ce système n'a même pas de mémoire de stockage séparée pour garder des contextes, mais seulement une mémoire tampon pour garder les contextes utilisés le plus souvent, avec les autres gardés sur une autre zone de la mémoire centrale.

Or, la mémoire de stockage enregistre les groupes de données associés à tous les dispositifs de mémoire tampon d'une chaîne de traitement pour tous les contextes en attente. Ainsi, la mémoire de stockage doit être de grande taille, de sorte que les opérations de lecture et d'écriture vers ou à partir de cette mémoire sont relativement lentes. Ainsi, la commutation de contexte est lente.

Il peut ainsi être souhaité de prévoir un dispositif de traitement de données qui permette de s'affranchir d'au moins une partie des problèmes et contraintes précités.

L'invention a donc pour objet un dispositif de traitement de données du type précité, caractérisé en ce que le dispositif de mémoire tampon est en outre conçu pour :
- contenir un deuxième groupe de données relatif à un deuxième contexte,
- sur réception d'une instruction de commutation de contexte, échanger des données entre l'unité de traitement et le deuxième groupe de données, à la place du premier groupe de données, et en ce qu'il comporte en outre un dispositif de commutation de contexte conçu pour:
   - émettre l'instruction de commutation de contexte au dispositif de mémoire tampon,
   - sélectionner un des groupes de données enregistrés dans la mémoire de stockage,
   - copier le premier groupe de données, depuis le dispositif de mémoire tampon, vers la mémoire de stockage,
   - copier le groupe de données sélectionné, depuis la mémoire de stockage, vers le dispositif de mémoire tampon.

La commutation de contexte se fait localement, dans le dispositif de mémoire tampon et entre les deux groupes de données qu'il contient. Ainsi, le dispositif de mémoire tampon n'a besoin de contenir que deux groupes de données et peut être optimisé pour réaliser la commutation de contexte très rapidement. Ce n'est que dans un deuxième temps que les échanges avec la mémoire de stockage sont réalisés. Ainsi, la lenteur de cette dernière n'impacte pas la vitesse de commutation de contexte, qui peut donc être réalisé rapidement.

De façon optionnelle :
- le dispositif de mémoire tampon comporte des première, deuxième et troisième mémoires locales dans chacune desquelles un groupe de données est destiné à être enregistré,
- la première mémoire est connectée à l'unité de traitement pour permettre l'échange de données entre le groupe de données qu'elle contient et l'unité de traitement,
- en réponse à la réception de l'instruction de commutation de contexte, le dispositif de mémoire tampon est conçu pour :
   - copier le premier groupe de données, depuis la deuxième mémoire locale, vers la troisième mémoire locale,
   - copier le deuxième groupe de données, depuis la première mémoire locale, vers la deuxième mémoire locale, à la place du premier groupe de données,
- le dispositif de commutation de contexte est en outre conçu pour :
   - copier le premier groupe de données, depuis la troisième mémoire locale, vers la mémoire de stockage,
   - copier le groupe de données sélectionné, depuis la mémoire de stockage, vers la première mémoire locale.

De façon optionnelle également, le dispositif de mémoire tampon comporte un registre à décalage incluant les trois mémoires locales.

De façon optionnelle également :
- le dispositif de mémoire tampon comporte des première et deuxième mémoires locales dans chacune desquelles un groupe de données est destiné à être enregistré, et un circuit sélecteur conçu pour sélectivement connecter chacun du dispositif de commutation de contexte et de l'unité de traitement à l'une respective des première et deuxième mémoires locales,
- avant la réception de l'instruction de commutation de contexte, le premier groupe de données est enregistré dans la deuxième mémoire locale et le deuxième groupe de données est enregistré dans la première mémoire locale, et le circuit sélecteur connecte la deuxième mémoire locale à l'unité de traitement,
- sur réception de l'instruction de commutation de contexte, le dispositif de mémoire tampon est conçu pour configurer le circuit sélecteur de manière à :
   - connecter l'unité de traitement à la première mémoire locale,
   - connecter en lecture le dispositif de commutation de contexte à la deuxième mémoire locale,
- le dispositif de commutation de contexte est en outre conçu pour :
   - copier le premier groupe de données, depuis la deuxième mémoire locale, vers la mémoire de stockage.

De façon optionnelle également :
- sur réception de l'instruction de commutation de contexte, le dispositif de mémoire tampon est conçu pour configurer le circuit sélecteur de manière à connecter en lecture et en écriture le dispositif de commutation de contexte à la deuxième mémoire locale, et
- le dispositif de commutation de contexte est en outre conçu pour copier le groupe de données sélectionné, depuis la mémoire de stockage, vers la deuxième mémoire locale, après que le premier groupe de données a été copié, depuis la deuxième mémoire locale, vers la mémoire de stockage.

De façon optionnelle également :
- le dispositif de mémoire tampon comporte une troisième mémoire locale dans laquelle un groupe de données est destiné à être enregistré,
- le circuit sélecteur est conçu pour sélectivement connecter chacun du dispositif de commutation de contexte et de l'unité de traitement à l'une respective des première, deuxième et troisième mémoires locales,
- sur réception de l'instruction de commutation de contexte, le dispositif de mémoire tampon est conçu pour configurer le circuit sélecteur de manière à connecter en écriture le dispositif de commutation de contexte à la troisième mémoire locale,
- le dispositif de commutation de contexte est en outre conçu pour copier le groupe de données sélectionné, depuis la mémoire de stockage, vers la troisième mémoire locale, en même temps que le premier groupe de données est copié, depuis la deuxième mémoire locale, vers la mémoire de stockage.

De façon optionnelle également, le circuit sélecteur est conçu pour mettre en oeuvre un mécanisme de renommage des objets matériels.

L'invention a également pour objet une chaîne de traitement de données comportant plusieurs dispositifs de traitement de données, chacun selon l'invention.

De façon optionnelle, la mémoire de stockage et/ou le dispositif de commutation de contexte sont communs aux dispositifs de traitement de données.

L'invention a également pour objet un procédé de commutation de contexte dans un dispositif de traitement de données comportant :
- une unité de traitement de données,
- une mémoire de stockage dans laquelle sont enregistrés des groupes de données relatifs à des contextes respectifs,
- un dispositif de mémoire tampon connecté à une entrée ou bien à une sortie de l'unité de traitement pour échanger des données avec elle, le dispositif de mémoire tampon contenant des premier et deuxième groupes de données relatifs à des contextes respectifs,
le procédé étant caractérisé en ce qu'il comporte :
- l'échange de données entre l'unité de traitement et le premier groupe de données,
- sur réception d'une instruction de commutation de contexte, l'échange de données entre l'unité de traitement et le deuxième groupe de données, à la place du premier groupe de données,
- la sélection d'un des groupes de données enregistrés dans la mémoire de stockage,
- la copie du premier groupe de données, depuis le dispositif de mémoire tampon, vers la mémoire de stockage,
- la copie du groupe de données sélectionné, depuis la mémoire de stockage, vers le dispositif de mémoire tampon.

L'invention sera mieux comprise à l'aide de la description qui va suivre, donnée uniquement à titre d'exemple et faite en se référant aux dessins annexés dans lesquels :
- la figure 1 représente schématiquement la structure générale d'une chaîne de traitement de données, selon un mode de réalisation de l'invention,
- la figure 2 représente schématiquement la structure générale d'un dispositif de traitement de données selon un premier mode de réalisation de l'invention, ainsi que d'autres éléments de la chaîne de traitement de la figure 1,
- la figure 3 illustre les étapes successives d'un procédé de commutation de contexte, selon un mode de réalisation de l'invention,
- les figures 4 à 7 sont des vues similaires à celle de la figure 2, illustrant les opérations réalisées lors d'une commutation de contexte,
- la figure 8 représente schématiquement la structure générale d'un dispositif de traitement de données selon un deuxième mode de réalisation de l'invention, ainsi que d'autres éléments de la chaîne de traitement de la figure 1,
- les figures 9 et 10 sont des vues similaires à celle de la figure 8, illustrant les opérations réalisées lors d'une commutation de contexte.

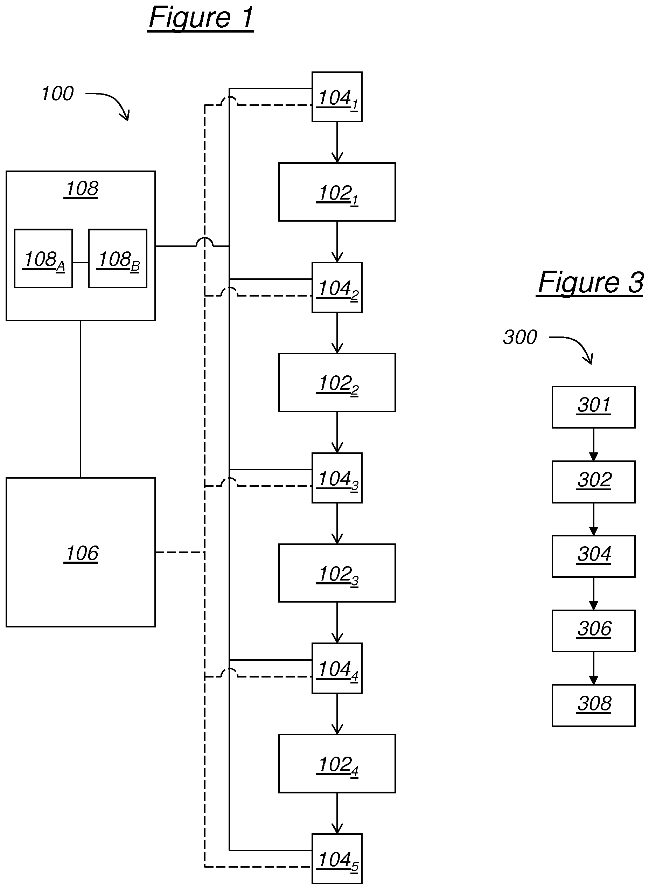

En référence à la figure 1, une chaîne de traitement 100 de données mettant en oeuvre l'invention va à présent être décrite. La chaîne de traitement 100 est par exemple destinée à être implémentée dans un système informatique.

La chaîne de traitement 100 comporte des unités de traitement de données 102₁...102₄ présentant chacune une entrée destinée à recevoir des données à traiter et une sortie destinée à fournir les données traitées. Dans l'exemple décrit, les unités de traitement 102₁...102₄ forment un chemin de traitement linéaire. Cependant, dans d'autres modes de réalisation, le chemin de traitement pourrait ne pas être linéaire et pourrait comporter par exemple des embranchements.

Les unités de traitement 102₁...102₄ réalisent les traitements souhaités sur les données, de manière généralement très rapide, mais elles ne stockent pas les données. Les unités de traitement 102₁...102₄ sont de préférence sans « état » de sorte que les données traitées auparavant n'influencent pas le traitement des données en cours.

Comme la vitesse de traitement des données peut varier d'une unité de traitement à l'autre, la chaîne de traitement 100 comporte en outre des dispositifs de mémoire tampon 104₁...104₅ chacun connecté à une entrée et/ou une sortie d'une des unités de traitement 102₁...102₄. Chaque dispositif de mémoire tampon 104₁...104₅ est conçu, lorsqu'il est connecté à l'entrée d'une unité de traitement, à fournir des données à cette unité de traitement et, lorsqu'il est connecté à une sortie d'une unité de traitement à recevoir des données de cette unité de traitement. Dans l'exemple décrit, un dispositif de mémoire tampon 104₂, 104₃, 104₄ est intercalé entre chaque deux unités de traitement consécutives le long du chemin de traitement, c'est-à-dire qu'il est connecté à la sortie de la première et à l'entrée de la deuxième. En outre, dans l'exemple décrit, un dispositif de mémoire tampon 104₁ est connecté à l'entrée de la première unité de traitement 102₁ du chemin de traitement, et un autre 104₅ est connecté à la sortie de la dernière unité de traitement 102₄ du chemin de traitement. Ainsi, les dispositifs de mémoire tampon 104₁...104₅ permettent d'équilibrer et lisser le flux des données.

Une unité de traitement 102₁...102₄ ne commence pas à prendre des données en entrée si elle n'a pas toutes les ressources nécessaires pour accomplir sa tâche (par exemple si l'unité de traitement doit accéder à des données distantes enregistrées dans un dispositif de stockage non représenté) ou bien s'il n'y a pas de place dans le dispositif de mémoire tampon connecté en sortie pour enregistrer les données traitées. La chaîne de traitement 100 est alors bloquée.

La chaîne de traitement 100 peut être partagée entre plusieurs tâches, par exemple exécutées par des programmes d'ordinateur respectifs. La chaîne de traitement 100 est ainsi utilisée alternativement par ces tâches. Pour qu'une tâche ne monopolise pas trop longtemps la chaîne de traitement 100, il est prévu de basculer de temps en temps d'une tâche à une autre.

Pour basculer de la tâche en cours à la tâche suivante, il est donc nécessaire de sauvegarder les données relatives à la tâche en cours contenues dans les dispositifs de mémoire tampon et de les échanger avec les données relatives à la tâche suivante pour que les unités de traitement travaillent avec ces nouvelles données. Cette opération s'appelle une commutation de contexte.

Selon l'invention, chaque dispositif de mémoire tampon 104₁...104₅ est conçu pour contenir plusieurs groupes de données relatifs à des contextes respectifs, de préférence seulement deux groupes de données. Il est en outre conçu pour échanger des données entre chaque unité de traitement à laquelle il est connecté et l'un des groupes de données qu'il contient, appelé groupe de données en cours. Il est en outre conçu, sur réception d'une instruction de commutation de contexte, pour basculer vers un autre groupe de données qu'il contient, qui devient le nouveau groupe de données en cours. Ainsi, après la commutation de contexte, les données sont échangées entre chaque unité de traitement à laquelle le dispositif de mémoire tampon est connecté et ce nouveau groupe de données en cours.

De préférence, les groupes de données sont gérés selon la règle du premier entré, premier sorti (de l'anglais « First In First Out » ou FIFO).

La chaîne de traitement 100 comporte en outre une mémoire de stockage 106 dans laquelle sont enregistrés, pour chaque dispositif de mémoire tampon 104₁...104₅, des groupes de données relatifs à d'autres contextes respectifs que ceux déjà contenus dans les dispositifs de mémoire tampon 104₁... 104₅.

La chaîne de traitement 100 comporte en outre un dispositif de commutation de contexte 108 conçu pour émettre l'instruction de commutation de contexte à tous les dispositifs de mémoire tampon 104₁...104₅.

Le dispositif de commutation de contexte 108 est en outre conçu, après que chaque dispositif de mémoire tampon 104₁...104₅ a changé le groupe de données en cours, pour copier l'ancien groupe de données en cours, depuis le dispositif de mémoire tampon 104₁... 104₅ considéré, vers la mémoire de stockage 106.

Le dispositif de commutation de contexte 108 est en outre conçu pour, d'une part, sélectionner les groupes de données enregistrés dans la mémoire de stockage relatifs à un même contexte et respectivement associés aux dispositifs de mémoire tampon 104₁...104₅, et, d'autre part, après que chaque dispositif de mémoire tampon 104₁...104₅ a changé le groupe de données en cours, pour les copier, depuis la mémoire de stockage 106, vers respectivement les dispositifs de mémoire tampon 104₁...104₅. Ainsi, lors de la prochaine commutation de contexte, les dispositifs de mémoire tampon 104₁...104₅ pourront respectivement basculer vers les groupes de données sélectionnés relatifs à un même nouveau contexte.

Le dispositif de commutation de contexte 108 est par exemple mis en œuvre sous la forme d'un système informatique comportant un processeur 108A et une mémoire 108B dans laquelle est enregistré un programme d'ordinateur comportant des instructions destinées à être exécutées par le processeur 108A pour la réalisation des fonctions du dispositif de commutation de contexte 108.

Alternativement, tout ou partie de ces fonctions pourrait être micro-programmé ou micro-câblé dans des circuits intégrés dédiés. Ainsi, en variante, le dispositif de commutation de contexte 108 pourrait être réalisé par un dispositif électronique composé uniquement de circuits numériques (sans programme d'ordinateur) pour la réalisation des mêmes fonctions.

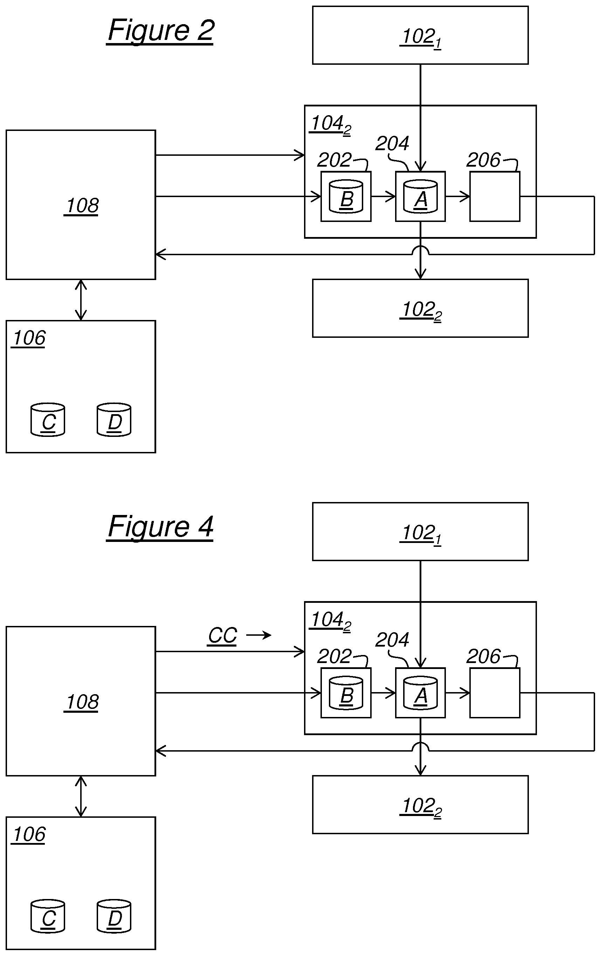

En référence à la figure 2, un premier exemple de réalisation selon l'invention des dispositifs de mémoire tampon 104₁...104₅ va à présent être décrit. Sur la figure 2, seul le dispositif de mémoire tampon 104₂ est illustré, sachant que les autres sont identiques.

Le dispositif de mémoire tampon 104₂ comporte un registre à décalage comprenant des première, deuxième et troisième mémoires locales 202, 204, 206 conçues pour respectivement contenir trois groupes de données. Le registre à décalage est en outre conçu, sur réception de l'instruction de commutation de contexte, pour copier le contenu de la deuxième mémoire locale 204 dans la troisième mémoire locale 206 et le contenu de la première mémoire locale 202 dans la deuxième mémoire locale 204. Ces deux copies se font simultanément et sont donc très rapides.

Les première et troisième mémoires locales 202, 206 sont en outre connectées au dispositif de commutation de contexte 108 afin que ce dernier puisse écrire dans la première mémoire locale 202 et lire dans la troisième mémoire locale 206.

En référence à la figure 3, un procédé de commutation de contexte 300 selon l'invention et mis en œuvre dans la chaîne de traitement 100, au niveau du dispositif de mémoire tampon 104₂, va à présent être décrit. Des procédés similaires sont mis en œuvre pour les autres dispositifs de mémoire tampon 104₁, 104₃, 104₄, 104₅.

Dans la suite de la description, un groupe de données relatif à un contexte X, sera appelé groupe de données X pour simplifier.

Initialement, deux groupes de données A, B sont enregistrés respectivement dans la deuxième mémoire locale 204 et dans la première mémoire locale 202. Deux autres groupes de données C, D sont enregistrés dans la mémoire de stockage 106. Ainsi lors d'une étape initiale 301, illustrée sur la figure 2, les unités de traitement 102₁, 102₂ échangent des données avec le groupe de données A, qui est donc le groupe de données en cours.

De retour à la figure 3, au cours d'une étape 302 illustrée sur la figure 4, le dispositif de commutation de contexte 108 envoie une instruction de commutation de contexte CC à tous les dispositifs de mémoire tampon 104₁, 104₂, 104₃, 104₄, 104₅ et donc en particulier au dispositif de mémoire tampon 104₂.

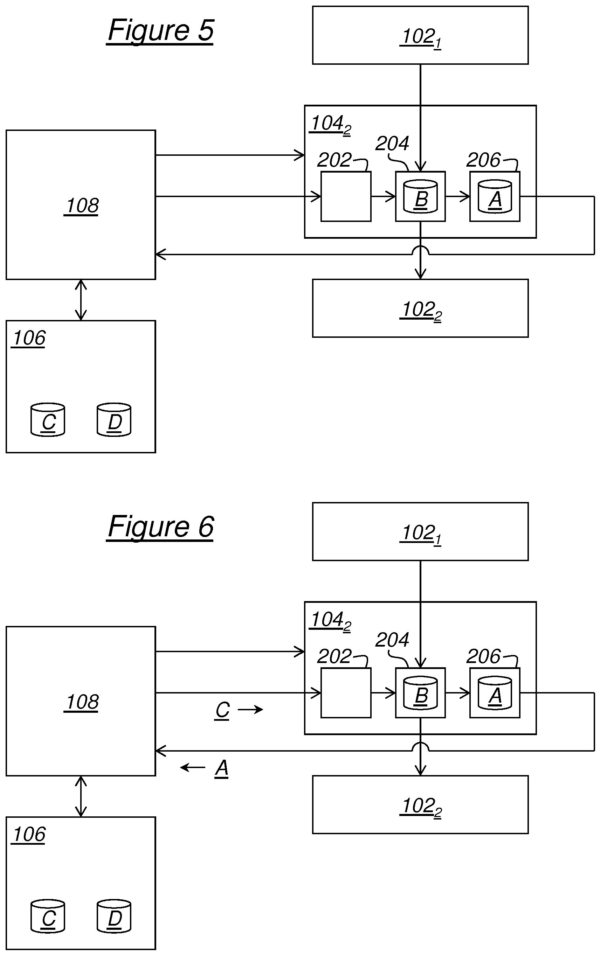

De retour à la figure 3, au cours d'une étape 304 illustrée sur la figure 5, sur réception de l'instruction de commutation de contexte CC, le dispositif de mémoire tampon 104₂ change le groupe de données en cours, en passant du groupe de données A au groupe de données B. Pour cela, le contenu de la deuxième mémoire locale 204 est copié dans la troisième mémoire locale 206 et le contenu de la première mémoire locale 202 est copié dans la deuxième mémoire locale 204. Ainsi, le groupe de données B se trouve dans la deuxième mémoire locale 204 de sorte que des données sont échangées entre les unités de traitement 102₁, 102₂ et le groupe de données B, à la place du groupe de données A.

De retour à la figure 3, au cours d'une étape 306, le dispositif de commutation de contexte 108 sélectionne un contexte vers lequel basculer lors de la prochaine commutation, les données de ce contexte étant enregistrées dans la mémoire de stockage 106. Ainsi, pour le dispositif de mémoire tampon 104₂, le dispositif de commutation de contexte 108 sélectionne le groupe de données relatif au contexte sélectionné et associé au dispositif de mémoire tampon 104₂. Dans l'exemple décrit, le dispositif de commutation de contexte 108 sélectionne, parmi le contexte C et le contexte D disponible, le contexte C et, plus particulièrement, pour le dispositif de mémoire tampon 104₂, le groupe de données C.

Pour les étapes 302 et 306 précédentes, la décision de commutation de contexte et la sélection du contexte sont réalisées par le dispositif de commutation de contexte 108 selon une stratégie prédéterminée, par exemple une des suivantes : un contexte est traité tant qu'il n'est pas bloqué, après on prend le contexte suivant dans l'ordre de demande d'accès à la chaîne de traitement 100 ; le dispositif de commutation de contexte 108 force la commutation de contexte même s'il n'y a pas de blocage pour donner une chance aux autres contextes (stratégie du « temps partagé ») ; chaque contexte est associé à une priorité et le contexte le plus prioritaire est sélectionné ; le contexte ayant utilisé le moins de temps la chaîne de traitement 100 est sélectionné (stratégie de « traitement équitable »). En outre, de préférence, le contexte sélectionné est pris parmi les contextes dits « prêts » c'est-à-dire qui satisfont les critères suivants : il y a des données dans ce contexte prêtes à être traitées ; les ressources matérielles pour le traitement sont disponibles ; il y a de la place pour stocker les données traitées.

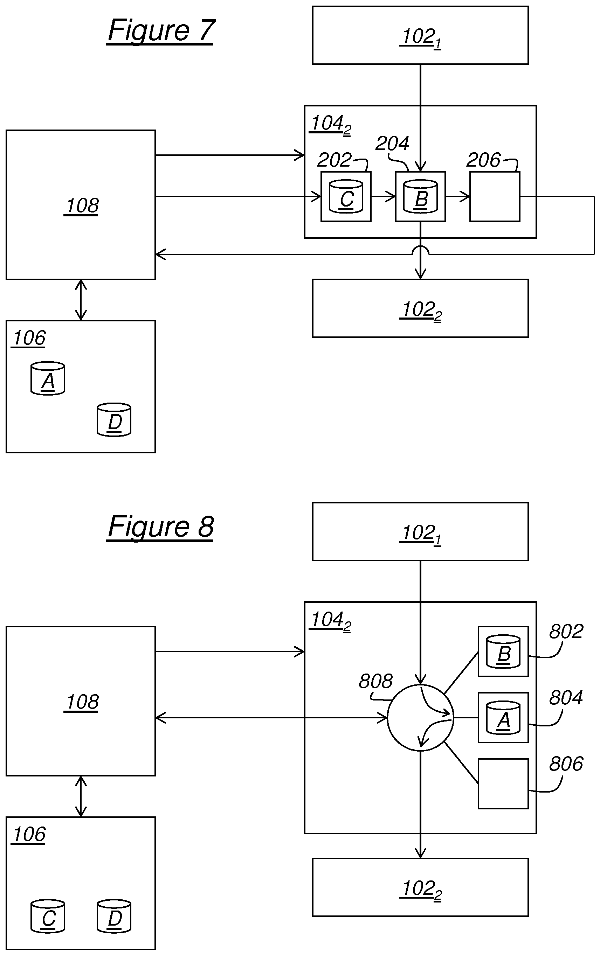

Au cours d'une étape 308 illustrée sur la figure 6, le dispositif de commutation de contexte 108 copie le groupe de données A, depuis le dispositif de mémoire tampon 104₂, vers la mémoire de stockage 106, et le groupe de données C, depuis la mémoire de stockage 106, vers la première mémoire locale 202. De préférence, ces opérations de copie sont réalisées en parallèle des échanges de données entre le groupe de données B et les unités de traitement 102₁, 102₂ de manière à ne pas interrompre le flux de traitement des données. Le résultat est illustré sur la figure 7. On remarque que l'on se retrouve dans une configuration similaire à celle de la figure 2. Le procédé 300 pourra donc recommencer lorsqu'une nouvelle commutation de contexte sera décidée.

Ainsi, il apparait que la commutation de contexte du contexte A vers le contexte B peut être faite très rapidement puisqu'elle est réalisée à l'intérieur du dispositif de mémoire tampon 104₂ qui est optimisé pour cette opération. Les opérations de copie depuis et vers la mémoire de stockage 106, qui sont généralement lentes, sont réalisées dans un deuxième temps, ce qui n'impacte pas la rapidité de la commutation de contexte.

En référence à la figure 8, un deuxième exemple de réalisation selon l'invention des dispositifs de mémoire tampon 104₁...104₅ va à présent être décrit. Sur la figure 8, seul le dispositif de mémoire tampon 104₂ est illustré, sachant que les autres sont identiques.

Le dispositif de mémoire tampon 104₂ comporte des première, deuxième et troisième mémoires locales 802, 804, 806 et un circuit sélecteur 808 connecté à ces mémoires locales 802, 804, 806, aux unités de traitement 102₁, 102₂ et au dispositif de commutation de contexte 108. Le circuit sélecteur 808 est conçu pour connecter chacun des unités de traitement 102₁, 102₂ et du dispositif de commutation de contexte 108 à l'une respective des mémoires locales 802, 804, 806. Cette connexion utilise par exemple la technique de « renommage des objets matériels ». L'établissement de ces connexions est très rapide.

Le procédé de commutation de contexte 300 s'applique également à ce mode de réalisation, avec les différences qui vont à présent être détaillées.

Initialement, comme illustré sur la figure 8, les groupes de données A, B sont enregistrés respectivement dans la deuxième mémoire locale 804 et dans la première mémoire locale 802. Le circuit sélecteur 808 est configuré pour que les unités de traitement 102₁, 102₂ soient toutes les deux connectées à la deuxième mémoire locale 804 pour échanger des données.

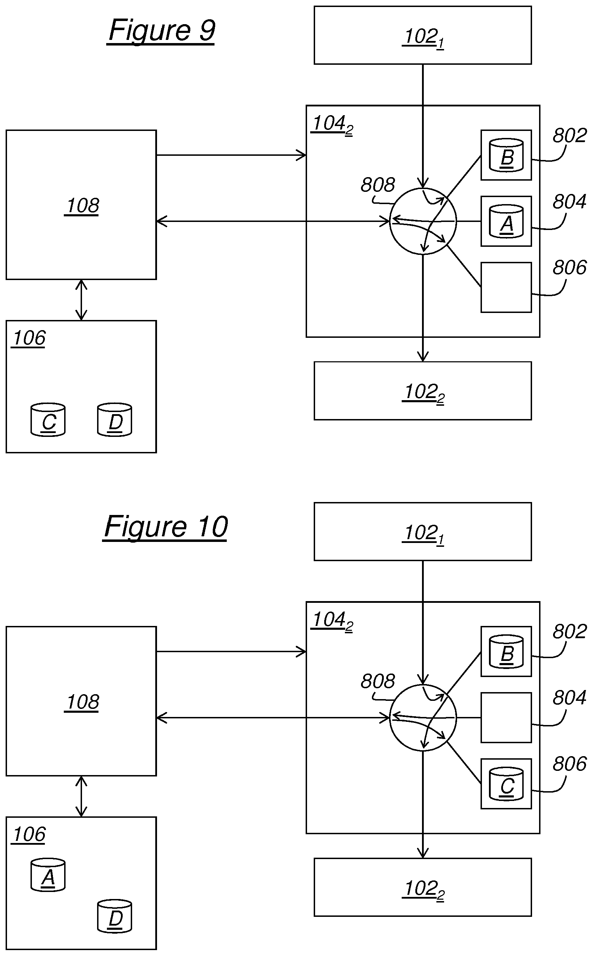

À l'étape 304 dont le résultat est illustré sur la figure 9, sur réception de l'instruction de commutation de contexte CC, le dispositif de mémoire tampon 104₂ configure le circuit sélecteur 808 de sorte que les unités de traitement 102₁, 102₂ soient connectées à la première mémoire locale 802 pour échanger des données avec le groupe de données B. En outre, le dispositif de mémoire tampon 104₂ configure le circuit sélecteur 808 de sorte que le dispositif de commutation de contexte 108 soit connecté en lecture à la deuxième mémoire locale 804 (pour lire son contenu) et en écriture à la troisième mémoire locale 806 (pour écrire dedans). Les connexions que le circuit sélecteur 808 doit établir sont par exemple indiquées dans l'instruction de commutation de contexte CC.

À l'étape 308 dont le résultat est illustré sur la figure 10, le dispositif de commutation de contexte 108 copie le groupe de données A, depuis la deuxième mémoire locale 804, vers la mémoire de stockage 106, et le groupe de données C, depuis la mémoire de stockage 106, vers la troisième mémoire locale 806. De préférence, ces deux opérations de copie sont réalisées en même temps ce qui est possible car trois mémoires locales sont prévues. Alternativement, les deux opérations de copie pourraient être réalisées l'une après l'autre. Dans ce cas, il est possible de se passer de la troisième mémoire locale 806 en copiant le groupe de données C dans la deuxième mémoire locale 804 à la place du groupe de données A, après que ce dernier a été copié dans la mémoire de stockage 106.

À nouveau, il apparait que la commutation de contexte du contexte A vers le contexte B peut être faite très rapidement puisqu'elle est réalisée à l'intérieur du dispositif de mémoire tampon 104₂ qui est optimisé pour cette opération. Les opérations de copie depuis et vers la mémoire de stockage 106, qui sont généralement lentes, peuvent être réalisées dans un deuxième temps, ce qui n'impacte pas la rapidité de la commutation de contexte.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en œuvre de l'enseignement qui vient de lui être divulgué.

## Revendications

1. Dispositif de traitement de données comportant :
- une unité de traitement de données (102₁...102₄),
- une mémoire de stockage (106) dans laquelle sont enregistrés des groupes de données (C, D) relatifs à des contextes respectifs,
- un dispositif de mémoire tampon (104₁...104₅) connecté à une entrée ou bien à une sortie de l'unité de traitement (102₁...102₄) pour échanger des données avec elle, le dispositif de mémoire tampon (104₁...104₅) étant conçu pour :
• contenir un premier groupe de données (A) relatif à un premier contexte,
• échanger des données entre l'unité de traitement (102₁...102₄) et
le premier groupe de données (A),
le dispositif de traitement de données étant **caractérisé en ce que** le dispositif de mémoire tampon (104₁... 104₅) est en outre conçu pour :
- contenir un deuxième groupe de données (B) relatif à un deuxième contexte,
- sur réception d'une instruction de commutation de contexte (CC), échanger des données entre l'unité de traitement (102₁...102₄) et le deuxième groupe de données (B), à la place du premier groupe de données (A),
et **en ce qu'**il comporte en outre un dispositif de commutation de contexte (108) conçu pour :
- émettre l'instruction de commutation de contexte (CC) au dispositif de mémoire tampon (104₁...104₅),
- sélectionner un (C) des groupes de données (C, D) enregistrés dans la mémoire de stockage (106),
- copier le premier groupe de données (A), depuis le dispositif de mémoire tampon (104₁...104₅), vers la mémoire de stockage (106),
- copier le groupe de données sélectionné (C), depuis la mémoire de stockage (106), vers le dispositif de mémoire tampon (104₁...104₅).

2. Dispositif selon la revendication 1, dans lequel :
- le dispositif de mémoire tampon (104₁...104₅) comporte des première, deuxième et troisième mémoires locales (202, 204, 206) dans chacune desquelles un groupe de données est destiné à être enregistré,
- la première mémoire (202) est connectée à l'unité de traitement (102₁...102₄) pour permettre l'échange de données entre le groupe de données qu'elle contient et l'unité de traitement (102₁...102₄),
- en réponse à la réception de l'instruction de commutation de contexte (CC), le dispositif de mémoire tampon (104₁... 104₅) est conçu pour :
• copier le premier groupe de données (A), depuis la deuxième mémoire locale (204), vers la troisième mémoire locale (206),
• copier le deuxième groupe de données (B), depuis la première mémoire locale (202), vers la deuxième mémoire locale (204), à la place du premier groupe de données (A),
- le dispositif de commutation de contexte (108) est en outre conçu pour :
• copier le premier groupe de données (A), depuis la troisième mémoire locale (206), vers la mémoire de stockage (106),
• copier le groupe de données sélectionné (C), depuis la mémoire de stockage (106), vers la première mémoire locale (202).

3. Dispositif selon la revendication 2, dans lequel le dispositif de mémoire tampon (104₁...104₅) comporte un registre à décalage incluant les trois mémoires locales (202, 204, 206).

4. Dispositif selon la revendication 1, dans lequel :
- le dispositif de mémoire tampon (104₁...104₅) comporte des première et deuxième mémoires locales (802, 804) dans chacune desquelles un groupe de données est destiné à être enregistré, et un circuit sélecteur (808) conçu pour sélectivement connecter chacun du dispositif de commutation de contexte (108) et de l'unité de traitement (102₁...102₄) à l'une respective des première et deuxième mémoires locales (802, 804),
- avant la réception de l'instruction de commutation de contexte (CC), le premier groupe de données (A) est enregistré dans la deuxième mémoire locale (804) et le deuxième groupe de données (B) est enregistré dans la première mémoire locale (802), et le circuit sélecteur (808) connecte la deuxième mémoire locale (804) à l'unité de traitement (102₁...102₄),
- sur réception de l'instruction de commutation de contexte (CC), le dispositif de mémoire tampon (104₁...104₅) est conçu pour configurer le circuit sélecteur (808) de manière à :
• connecter l'unité de traitement (102₁...102₄) à la première mémoire locale (802),
• connecter en lecture le dispositif de commutation de contexte (108) à la deuxième mémoire locale (804),
- le dispositif de commutation de contexte (108) est en outre conçu pour :
• copier le premier groupe de données (A), depuis la deuxième mémoire locale (804), vers la mémoire de stockage (106).

5. Dispositif selon la revendication 4, dans lequel :
- sur réception de l'instruction de commutation de contexte (CC), le dispositif de mémoire tampon (104₁...104₅) est conçu pour configurer le circuit sélecteur (808) de manière à connecter en lecture et en écriture le dispositif de commutation de contexte (108) à la deuxième mémoire locale (804), et
- le dispositif de commutation de contexte (108) est en outre conçu pour copier le groupe de données sélectionné (C), depuis la mémoire de stockage (106), vers la deuxième mémoire locale (804), après que le premier groupe de données (A) a été copié, depuis la deuxième mémoire locale (804), vers la mémoire de stockage (106).

6. Dispositif selon la revendication 4, dans lequel :
- le dispositif de mémoire tampon (104₁... 104₅) comporte une troisième mémoire locale (806) dans laquelle un groupe de données est destiné à être enregistré,
- le circuit sélecteur (808) est conçu pour sélectivement connecter chacun du dispositif de commutation de contexte (108) et de l'unité de traitement (102₁... 102₄) à l'une respective des première, deuxième et troisième mémoires locales (802, 804, 806),
- sur réception de l'instruction de commutation de contexte (CC), le dispositif de mémoire tampon (104₁...104₅) est conçu pour configurer le circuit sélecteur (808) de manière à connecter en écriture le dispositif de commutation de contexte (108) à la troisième mémoire locale (806),
- le dispositif de commutation de contexte (108) est en outre conçu pour copier le groupe de données sélectionné (C), depuis la mémoire de stockage (106), vers la troisième mémoire locale (806), en même temps que le premier groupe de données (A) est copié, depuis la deuxième mémoire locale (804), vers la mémoire de stockage (106).

7. Dispositif selon l'une quelconque des revendications 4 à 6, dans lequel le circuit sélecteur (808) est conçu pour mettre en œuvre un mécanisme de renommage des objets matériels.

8. Chaîne de traitement de données (100) comportant plusieurs dispositifs de traitement de données, chacun selon l'une quelconque des revendications 1 à 7.

9. Chaîne de traitement de données (100) selon la revendication 8, dans laquelle la mémoire de stockage (106) et/ou le dispositif de commutation de contexte (108) sont communs aux dispositifs de traitement de données.

10. Procédé de commutation de contexte (300) dans un dispositif de traitement de données comportant :
- une unité de traitement de données (102₁...102₄),
- une mémoire de stockage (106) dans laquelle sont enregistrés des groupes de données (C, D) relatifs à des contextes respectifs,
- un dispositif de mémoire tampon (104₁...104₅) connecté à une entrée ou bien à une sortie de l'unité de traitement (102₁...102₄) pour échanger des données avec elle, le dispositif de mémoire tampon (104₁...104₅) contenant des premier et deuxième groupes de données (A, B) relatifs à des contextes respectifs,
le procédé (300) étant **caractérisé en ce qu'**il comporte :
- l'échange (301) de données entre l'unité de traitement (102₁...102₄) et le premier groupe de données (A),
- sur réception d'une instruction de commutation de contexte, l'échange (304) de données entre l'unité de traitement (102₁...102₄) et le deuxième groupe de données (B), à la place du premier groupe de données (A),
- la sélection (306) d'un (C) des groupes de données (C, D) enregistrés dans la mémoire de stockage (106),
- la copie du premier groupe de données (A), depuis le dispositif de mémoire tampon (104₁...104₅), vers la mémoire de stockage (106),
- la copie du groupe de données sélectionné (C), depuis la mémoire de stockage (106), vers le dispositif de mémoire tampon (104₁... 104₅).

## Patentansprüche

1. Vorrichtung zur Datenverarbeitung, Folgendes beinhaltend:
- eine Datenverarbeitungseinheit (102₁...102₄),
- einen Ablagespeicher (106), in dem Datengruppen (C, D) in Bezug auf jeweilige Kontexte gespeichert sind,
- eine Pufferspeichervorrichtung (104₁...104₅), die mit einem Eingang oder aber mit einem Ausgang der Verarbeitungseinheit (102₁...102₄) verbunden ist, um damit Daten auszutauschen, wobei die Pufferspeichervorrichtung (104₁... 104₅) gestaltet ist, um:
• eine erste Datengruppe (A) in Bezug auf einen ersten Kontext zu enthalten,
• Daten zwischen der Verarbeitungseinheit (102₁...102₄) und der ersten Datengruppe (A) auszutauschen, wobei die Datenverarbeitungsvorrichtung **dadurch gekennzeichnet ist, dass** die Pufferspeichervorrichtung (104₁... 104₅) weiter gestaltet ist, um:
- eine zweite Datengruppe (B) in Bezug auf einen zweiten Kontext zu enthalten,
- bei Empfang eines Kontext-Umschaltbefehls (CC) Daten zwischen der Verarbeitungseinheit (102₁...102₄) und der zweiten Datengruppe (B) anstelle der ersten Datengruppe (A) auszutauschen,
und dadurch, dass sie weiter eine Kontext-Umschaltvorrichtung (108) beinhaltet, die gestaltet ist, um:
- den Kontext-Umschaltbefehl (CC) an die Pufferspeichervorrichtung (104₁...104₅) auszugeben,
- eine (C) der in dem Ablagespeicher (106) gespeicherten Datengruppen (C, D) auszuwählen,
- die erste Datengruppe (A) aus der Pufferspeichervorrichtung (104₁...104₅) in den Ablagespeicher (106) zu kopieren,
- die ausgewählte Datengruppe (C) aus dem Ablagespeicher (106) in die Pufferspeichervorrichtung (104₁...104₅) zu kopieren.

2. Vorrichtung nach Anspruch 1, wobei:
- die Pufferspeichervorrichtung (104₁...104₅) erste, zweite und dritte lokale Speicher (202, 204, 206) beinhaltet, in jedem davon eine Datengruppe dazu bestimmt ist, gespeichert zu werden,
- der erste Speicher (202) mit der Verarbeitungseinheit (102₁...102₄) verbunden ist, um den Datenaustausch zwischen der Datengruppe, die er enthält, und der Verarbeitungseinheit (102₁...102₄) zu ermöglichen,
- als Reaktion auf den Empfang des Kontext-Umschaltbefehls (CC) die Pufferspeichervorrichtung (104₁...104₅) gestaltet ist, um:
• die erste Datengruppe (A) aus dem zweiten lokalen Speicher (204) in den dritten lokalen Speicher (206) zu kopieren,
• die zweite Datengruppe (B) anstelle der ersten Datengruppe (A) aus dem ersten lokalen Speicher (202) in den zweiten lokalen Speicher (204) zu kopieren,
- die Kontext-Umschaltvorrichtung (108) weiter gestaltet ist, um:
• die erste Datengruppe (A) aus dem dritten lokalen Speicher (206) in den Ablagespeicher (106) zu kopieren,
• die ausgewählte Datengruppe (C) aus dem Ablagespeicher (106) in den ersten lokalen Speicher (202) zu kopieren.

3. Vorrichtung nach Anspruch 2, wobei die Pufferspeichervorrichtung (104₁...104₅) ein Schieberegister beinhaltet, das die drei lokalen Speicher (202, 204, 206) beinhaltet.

4. Vorrichtung nach Anspruch 1, wobei:
- die Pufferspeichervorrichtung (104₁...104₅) erste und zweite lokale Speicher (802, 804) beinhaltet, in jedem davon eine Datengruppe dazu bestimmt ist, gespeichert zu werden, und eine Auswahlschaltung (808), die gestaltet ist, um selektiv jede der Kontext-Umschaltvorrichtung (108) und der Verarbeitungseinheit (102₁...102₄) mit einem jeweiligen der ersten und zweiten lokalen Speicher (802, 804) zu verbinden,
- vor Empfang des Kontext-Umschaltbefehls (CC) die erste Datengruppe (A) in dem zweiten lokalen Speicher (804) gespeichert wird und die zweite Datengruppe (B) in dem ersten lokalen Speicher (802) gespeichert wird und die Auswahlschaltung (808) den zweiten lokalen Speicher (804) mit der Verarbeitungseinheit (102₁...102₄) verbindet,
- bei Empfang des Kontext-Umschaltbefehls (CC) die Pufferspeichervorrichtung (104₁...104₅) gestaltet ist, um die Auswahlschaltung (808) zu konfigurieren, um:
• die Verarbeitungseinheit (102₁...102₄) mit dem ersten lokalen Speicher (802) zu verbinden,
• die Kontext-Umschaltvorrichtung (108) zum Lesen mit dem zweiten lokalen Speicher (804) zu verbinden,
- die Kontext-Umschaltvorrichtung (108) weiter gestaltet ist, um:
• die erste Datengruppe (A) von dem zweiten lokalen Speicher (804) in den Ablagespeicher (106) zu kopieren.

5. Vorrichtung nach Anspruch 4, wobei:
- bei Empfang des Kontext-Umschaltbefehls (CC) die Pufferspeichervorrichtung (104₁...104₅) gestaltet ist, um die Auswahlschaltung (808) zu konfigurieren, um die Kontext-Umschaltvorrichtung (108) mit dem zweiten lokalen Speicher (804) zum Lesen und zum Schreiben zu verbinden, und
- die Kontext-Umschaltvorrichtung (108) weiter gestaltet ist, um die ausgewählte Datengruppe (C) aus dem Ablagespeicher (106) in den zweiten lokalen Speicher (804) zu kopieren, nachdem die erste Datengruppe (A) von dem zweiten lokalen Speicher (804) in den Ablagespeicher (106) kopiert worden ist.

6. Vorrichtung nach Anspruch 4, wobei:
- die Pufferspeichervorrichtung (104₁...104₅) einen dritten lokalen Speicher (806) beinhaltet, in dem eine Datengruppe bestimmt ist, gespeichert zu werden,
- die Auswahlschaltung (808) gestaltet ist, um selektiv jede der Kontext-Umschaltvorrichtung (108) und der Verarbeitungseinheit (102₁...102₄) mit einem jeweiligen der ersten, zweiten und dritten lokalen Speicher (802, 804, 806) zu verbinden,
- bei Empfang des Kontext-Umschaltbefehls (CC) die Pufferspeichervorrichtung (104₁...104₅) gestaltet ist, um die Auswahlschaltung (808) zu konfigurieren, um die Kontext-Umschaltvorrichtung (108) mit dem dritten lokalen Speicher (806) zum Schreiben zu verbinden,
- die Kontext-Umschaltvorrichtung (108) weiter gestaltet ist, um die ausgewählte Datengruppe (C) aus dem Ablagespeicher (106) zur selben Zeit in den dritten lokalen Speicher (806) zu kopieren, wie die erste Datengruppe (A) von dem zweiten lokalen Speicher (804) in den Ablagespeicher (106) kopiert wird.

7. Vorrichtung nach einem der Ansprüche 4 bis 6, wobei die Auswahlschaltung (808) gestaltet ist, um einen Umbenennungsmechanismus der materiellen Gegenstände umzusetzen.

8. Datenverarbeitungskette (100), mehrere Datenverarbeitungsvorrichtungen, jede nach einem der Ansprüche 1 bis 7, beinhaltend.

9. Datenverarbeitungskette (100) nach Anspruch 8, wobei der Ablagespeicher (106) und/oder die Kontext-Umschaltvorrichtung (108) den Datenverarbeitungsvorrichtungen gemeinsam sind.

10. Kontext-Umschaltverfahren (300) in einer Datenverarbeitungsvorrichtung, Folgendes beinhaltend:
- eine Datenverarbeitungseinheit (102₁...102₄),
- einen Ablagespeicher (106), in dem Datengruppen (C, D) in Bezug auf jeweilige Kontexte gespeichert sind,
- eine Pufferspeichervorrichtung (104₁...104₅), die mit einem Eingang oder aber mit einem Ausgang der Verarbeitungseinheit (102₁...102₄) verbunden ist, um damit Daten auszutauschen, wobei die Pufferspeichervorrichtung (104₁...104₅) erste und zweite Datengruppen (A, B) in Bezug auf jeweilige Kontexte enthält,
wobei das Verfahren (300) **dadurch gekennzeichnet ist, dass** es Folgendes beinhaltet:
- den Austausch (301) von Daten zwischen der Verarbeitungseinheit (102₁...102₄) und der ersten Datengruppe (A),
- bei Empfang eines Kontext-Umschaltbefehls den Austausch (304) von Daten zwischen der Verarbeitungseinheit (102₁...102₄) und der zweiten Datengruppe (B) anstelle der ersten Datengruppe (A),
- die Auswahl (306) einer (C) der Datengruppen (C, D), die in dem Ablagespeicher (106) gespeichert sind,
- die Kopie der ersten Datengruppe (A) aus der Pufferspeichervorrichtung (104₁...104₅) in den Ablagespeicher (106),
- die Kopie der ausgewählten Datengruppe (C) aus dem Ablagespeicher (106) in die Pufferspeichervorrichtung (104₁...104₅).

## Claims

1. Data-processing device comprising:
- a unit for processing data (102₁...102₄),
- a storage memory (106) in which groups of data (C, D) relative to respective contexts are recorded,
- a buffer-memory device (104₁...104₅) connected to an input or to an output of the processing unit (102₁...102₄) in order to exchange data with it, the buffer-memory device (104₁...104₅) being designed to:
• contain a first group of data (A), relative to a first context,
• exchange data between the processing unit (102₁...102₄) and the first group of data (A),
the data-processing device being **characterized in that** the buffer-memory device (104₁...104₅) is further designed to:
- contain a second group of data (B), relative to a second context,
- upon reception of a context-switching instruction (CC), exchange data between the processing unit (102₁...102₄) and the second group of data (B), in place of the first group of data (A),
and **in that** it further comprises a context-switching device (108) designed to:
- emit the context-switching instruction (CC) to the buffer-memory device (104₁...104₅),
- select one (C) of the groups of data (C, D) recorded in the storage memory (106),
- copy the first group of data (A), from the buffer-memory device (104₁...104₅), to the storage memory (106),
- copy the selected group of data (C), from the storage memory (106), to the buffer-memory device (104₁...104₅).

2. Device according to claim 1, wherein:
- the buffer-memory device (104₁...104₅) comprises a first, a second and a third local memory (202, 204, 206) in each of which a group of data is intended to be recorded,
- the first memory (202) is connected to the processing unit (102₁...102₄) in order to allow the exchange of data between the group of data that it contains and the processing unit (102₁...102₄),
- in response to the reception of the context-switching instruction (CC), the buffer-memory device (104₁...104₅) is designed to:
• copy the first group of data (A), from the second local memory (204), to the third local memory (206),
• copy the second group of data (B), from the first local memory (202), to the second local memory (204), in place of the first group of data (A),
- the context-switching device (108) is further designed to:
• copy the first group of data (A), from the third local memory (206), to the storage memory (106),
• copy the selected group of data (C), from the storage memory (106), to the first local memory (202).

3. Device according to claim 2, wherein the buffer-memory device (104₁...104₅) comprises a shift register including the three local memories (202, 204, 206).

4. Device according to claim 1, wherein:
- the buffer-memory device (104₁...104₅) comprises a first and a second local memory (802, 804) in each of which a group of data is intended to be recorded, and a selector circuit (808) designed to selectively connect each of the context-switching device (108) and the processing unit (102₁...102₄) to one of, respectively, the first and the second local memory (802, 804),
- before the reception of the context-switching instruction (CC), the first group of data (A) is recorded in the second local memory (804) and the second group of data (B) is recorded in the first local memory (802), and the selector circuit (808) connects the second local memory (804) to the processing unit (102₁...102₄),
- upon reception of the context-switching instruction (CC), the buffer-memory device (104₁...104₅) is designed to configure the selector circuit (808) in such a way as to:
• connect the processing unit (102₁...102₄) to the first local memory (802),
• connect, in reading mode, the context-switching device (108) to the second local memory (804),
- the context-switching device (108) is further designed to:
• copy the first group of data (A), from the second local memory (804), to the storage memory (106).

5. Device according to claim 4, wherein:
- upon reception of the context-switching instruction (CC), the buffer-memory device (104₁...104₅) is designed to configure the selector circuit (808) in such a way as to connect, in reading mode and in writing mode, the context-switching device (108) to the second local memory (804), and
- the context-switching device (108) is further designed to copy the selected group of data (C), from the storage memory (106), to the second local memory (804), after the first group of data (A) has been copied, from the second local memory (804), to the storage memory (106).

6. Device according to claim 4, wherein:
- the buffer-memory device (104₁... 104₅) comprises a third local memory (806) in which a group of data is intended to be recorded,
- the selector circuit (808) is designed to selectively connect each of the context-switching device (108) and the processing unit (102₁...102₄) to one of, respectively, the first, the second and the third local memory (802, 804, 806),
- upon reception of the context-switching instruction (CC), the buffer-memory device (104₁...104₅) is designed to configure the selector circuit (808) in such a way as to connect, in writing mode, the context-switching device (108) to the third local memory (806),
- the context-switching device (108) is further designed to copy the selected group of data (C), from the storage memory (106), to the third local memory (806), at the same time as the first group of data (A) is copied, from the second local memory (804), to the storage memory (106).

7. Device according to any one of claims 4 to 6, wherein the selector circuit (808) is designed to implement a mechanism for renaming the material objects.

8. Data-processing chain (100) comprising a plurality of data-processing devices, each according to any one of claims 1 to 7.

9. Data processing chain (100) according to claim 8, wherein the storage memory (106) and/or the context-switching device (108) are shared by the data-processing devices.

10. Method for context-switching (300) in a data-processing device comprising:
- a data-processing unit (102₁...102₄),
- a storage memory (106) in which groups of data (C, D) relative to respective contexts are recorded,
- a buffer-memory device (104₁...104₅) connected to an input or to an output of the processing unit (102₁...102₄) in order to exchange data with it, the buffer-memory device (104₁...104₅) containing a first and a second group of data (A, B) relative to respective contexts,
the method (300) being **characterized in that** it comprises:
- the exchange (301) of data between the processing unit (102₁...102₄) and the first group of data (A),
- upon reception of a context-switching instruction, the exchange (304) of data between the processing unit (102₁...102₄) and the second group of data (B), in place of the first group of data (A),
- the selection (306) of one (C) of the groups of data (C, D) recorded in the storage memory (106),
- the copying of the first group of data (A), from the buffer-memory device (104₁...104₅), to the storage memory (106),
- the copying of the selected group of data (C), from the storage memory (106), to the buffer-memory device (104₁...104₅).
